# EUROPÄISCHE PATENTSCHRIFT

(11) **EP 1 279 625 B1**
(45) Veröffentlichungstag und Bekanntmachung des Hinweises auf die Patenterteilung: **10.11.2004**
(21) Anmeldenummer: 02002922.9
(22) Anmeldetag: 09.02.2002
(51) Int. Cl.: B65G 15/00, B65G 21/06

(54) **Verfahren und Vorrichtung zum Aufspannen und Entfernen eines endlosen Transportbands**
Method and device for mounting and removing an endless conveyor belt
Procédé et appareil d'accrochage et d'enlèvement d'une bande transporteuse sans fin

(30) Priorität: 23.07.2001 DE 10135772
(43) Veröffentlichungstag der Anmeldung: 29.01.2003
(73) Patentinhaber: Eastman Kodak Company, Rochester, New York 14650 (US)
(72) Erfinder: Jader, Lennardt, 24229 Strande (DE)
(74) Vertreter: Lauerwald, Jörg

(56) Entgegenhaltungen:
- EP-A- 1 013 570
- CH-A- 683 176
- FR-A- 2 663 309
- DATABASE WPI Section Ch, Week 198426 Derwent Publications Ltd., London, GB; Class M22, AN 1984-164248 XP002218296 -& SU 1 049 173 A (METALLURG EQUIP CONSTR) , 23. Oktober 1983 (1983-10-23)

## Beschreibung

Die Erfindung betrifft ein Verfahren zum Aufspannen und Entfernen eines endlosen Transportbands nach Anspruch 1 und eine Transporteinrichtung nach Anspruch 4.

Transportbänder von Druckmaschinen zum Befördern von Bedruckstoff durch die Druckmaschine, auch Webs genannt, bestehen aus einem Endlosband, das um einen Rahmen gespannt ist und von Rollen mit hoher Geschwindigkeit angetrieben wird. Beim Betrieb der Druckmaschine ist zuweilen ein Austausch des Webs erforderlich, wobei das aufgespannte Web entfernt und ein anderes Web an dessen Stelle aufgespannt wird. Erschwert wird der Arbeitsvorgang des Auswechselns insbesondere dadurch, dass das Web nicht trennbar ist. Zum Auswechseln ist es bisher notwendig, dass ein an der speziellen Druckmaschine geschulter Wartungstechniker den Standort der Druckmaschine aufsucht. Oft hat der Wartungstechniker lange Anfahrtswege und benötigt zum Auswechseln des Webs erhebliche Zeit. Dies verursacht hohe Wartungskosten für die Druckmaschine und lange kostspielige Ausfallzeiten der Druckmaschine. Das Dokument SU 1049173 beschreibt eine Wechseleinrichtung für ein endloses Transportband, welche gegeneinander drehbare Hebel mit bewegbaren Rollen umfaßt. Zum Verringern der Aufspannzeit des Transportbands und zum Vereinfachen der Bedienung weist die Wechseleinrichtung einen Rahmen mit einer halbrunden Führungsfläche für das Transportband auf. Wenn die Wechseleinrichtung an der Maschine angebracht ist, wird das Transportband einfach von einem Satz Rollen zu einem anderen Satz Rollen gedrückt. Dieser Lösungsvorschlag erfordert einen hohen Vorrichtungsaufwand, die Wechseleinrichtung ist ständig an der Maschine angebracht.

Aufgabe der Erfindung ist, ein endloses Transportband oder Web kostengünstig, schnell und auf einfache Weise auf einen Rahmen aufzuspannen oder von diesem zu entfernen.

Zur Lösung der Aufgabe offenbart die Erfindung ein Verfahren nach Anspruch 1 und eine Transporteinrichtung nach Anspruch 4.

Die Erfindung ermöglicht einem einzigen Bediener einer Maschine das einfache und schnelle Wechseln des endlosen Transportbands oder Webs.

Ausführungsformen der Erfindung sind in den Unteransprüchen aufgeführt.

Um die zum Wechseln des Webs erforderliche Kraft zu verringern, läßt sich der Rahmen mit dem Web vor dem Wechseln des Webs nach unten umklappen.

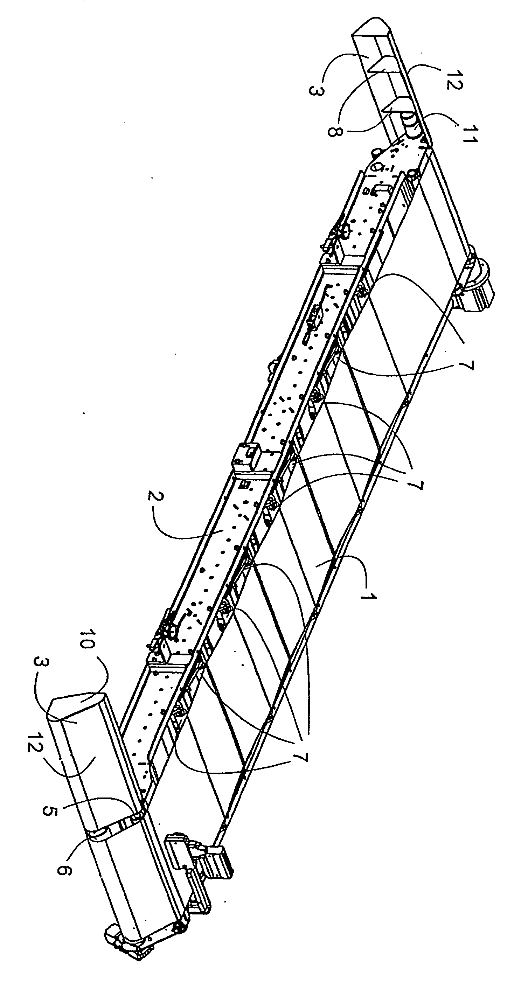

Nachfolgend ist die Erfindung in Bezug auf die beiliegende Figur beschrieben. Die Figur zeigt eine perspektivische Ansicht eines Rahmens 2 einer Druckmaschine, der eine Vielzahl von Rollen 7 einschließlich jeweils einer ersten Umlenkrolle 5 und einer zweiten Umlenkrolle 6 an einer Stirnseite des Rahmens 2 umfasst. Um den Rahmen 2, an den Rollen 7, den ersten Umlenkrollen 5 und den zweiten Umlenkrollen 6 ist ein endloses Transportband zum Befördern von Bedruckstoff, auch Web 1 genannt aufgespannt. Das Web 1 ist ein nahezu nahtloses Endlosband aus einem transparenten Kunststoff und wird im Betrieb von den Rollen 7 oder Umlenkrollen 5, 6 mit hoher Geschwindigkeit angetrieben. Das Web 1 ist einem hohen Verschleiß unterworfen und wird von Zeit zu Zeit ausgewechselt. Das einfache Abziehen des aufgespannten Webs 1 vom Rahmen 2 ist wegen der Abmessungen der Anordnung nach der Figur wenigstens für einen einzigen Bediener der Druckmaschine beschwerlich. Ferner besteht die Gefahr, dass das Web 1 beim einfachen Abziehen durch den Rahmen 2 beschädigt wird. In Bezug auf die Erfindung öffnet der Bediener der Druckmaschine das Gehäuse der Druckmaschine (nicht dargestellt), in dem sich der Rahmen 2 nach der Figur befindet, und bringt nun auf einfache Weise selbstsichernde Hilfsträger 3 an jede Stirnseite des Rahmens 2 an. Die Hilfsträger 3 weisen eine Außenform auf, welche etwa der Laufbahn des Webs 1 auf dem Rahmen 2 im Bereich der Enden des Rahmens 2 entspricht, wie in der Figur ersichtlich. Der Begriff Außenform bezeichnet in diesem Zusammenhang die vom Rahmen 2 aus betrachtet außenliegenden Flächen 12 der angebrachten Hilfsträger 3. Die Enden des Rahmens 2 verfügen jeweils über eine erste Umlenkrolle 5 und eine zweite Umlenkrolle 6, die höhenversetzt und in Längsrichtung zum Rahmen 2 zueinander versetzt angeordnet sind. Folglich weist die Laufbahn des Webs 1 im Bereich der Enden des Rahmens 2 eine Krümmung auf, wobei der Querschnitt der Endbereiche des Rahmens 2 annähernd dreieckig ist, wenn die fehlende Dreieckseite durch die Lotrechte beginnend bei der ersten Umlenkrolle 5 und beim Web 1 an der Unterseite des Rahmens 2 endend gebildet ist. Die Hilfsträger 3 weisen eine hieran angepasste Außenschalung mit einem angenähert dreieckigen Querschnitt auf. Die Hilfsträger 3 sind dünnwandig aus Aluminium gefertigt, hohl ausgebildet und können vom Rahmen 2 aus betrachtet beim angebrachten Zustand der Hilfsträger 3 nach der Figur innenliegend Stabilisierungselemente 8 aufweisen, etwa dünne Rippen, die sich innerhalb der Hilfsträger 3 senkrecht erstrecken und einteilig mit dem Hilfsträger verbunden sind. Die außenliegenden Flächen 12 der Hilfsträger 3 weisen einen sehr geringen Reibungskoeffizienten auf, damit die zum An- und Abstreifen des Webs 1 benötigte Kraft klein ist. Die außenliegenden Flächen 12 aus Aluminium können hierzu poliert sein. An einer Seite weist der Hilfsträger 3 eine Seitenwand 10 auf, welche den Hilfsträger 3 zur Seite abschließt und stabilisiert. Die entgegengesetzte Seite des Hilfsträgers 3 weist keine Seitenwand 10 auf, sondern ist zum Befestigen am Rahmen 2 vorgesehen. Zum einfachen und schnellen Befestigen steht ein Zapfen 11 senkrecht vom Rahmen 2 hervor, welcher in den Hilfsträger 3 eingreift und eine Verbindung herstellt. Nun ist der Zustand entsprechend der Figur hergestellt. Die außenliegenden Flächen 12 bilden mit benachbarten an der ersten Umlenkrolle 5 und der zweiten Umlenkrolle 6 anliegenden Flächen des Webs 1 nahezu homogene Ebenen, nach Anbringen der Hilfsträger 3 gehen die außenliegenden Flächen 12 nahezu nahtlos in die Flächen des Webs 1 über. Der Bediener kann das Web 1auf einfache Weise über die außenliegenden Flächen 12 des Hilfsträgers 3 ziehen, wobei das Web 1 mit geringem Reibungswiderstand über die außenliegenden Flächen 12 gleitet, und das Web 1 ohne seine Beschädigung vom Rahmen 2 entfernen. Hierzu wechselt der Bediener nur wenige Male von einer Stirnseite des Rahmens 2 mit Hilfsträger 3 zur anderen Stirnseite des Rahmens 2 mit Hilfsträger 3 und zieht das Web 1 an der entsprechenden Stirnseite Stück für Stück über den entsprechenden Hilfsträger 3. Auf ähnliche Weise wird das Aufspannen des Webs 1 auf den Rahmen 2 durchgeführt. Nach dem Auswechseln des Webs 1, d.h. dem Entfernen des Webs 1 und dem Aufspannen eines anderen Webs 1, werden die selbstsichernden Hilfsträger 3 durch einfaches Abheben vom Rahmen 2 entfernt. Nach dem Schließen des Druckmaschinengehäuses ist die Druckmaschine betriebsbereit. Bevorzugt ist der Rahmen 2 nach dem Öffnen des Gehäuses der Druckmaschine an der geöffneten Längsseite nach unten umklappbar. An der entgegengesetzten Rahmenseite, dem Gegenrahmen, befindet sich ein Drehpunkt, um den der Rahmen 2 geklappt wird. Der Rahmen 2 wird vom Bediener bis zu einem Anschlag nach unten geklappt, anschließend ist das Entfernen oder Aufbringen des Webs 1 wesentlich erleichtert. Das Herausziehen oder Herausheben des Rahmens 2 aus der Druckmaschine zum Wechseln des Webs 1 und die hierzu erforderlichen Vorrichtungen des Stands der Technik werden auf diese Weise eingespart.

## Patentansprüche

1. Verfahren zum Aufspannen und Entfernen eines endlosen Transportbands oder Webs (1) auf einen Rahmen (2), insbesondere in einer Druckmaschine, **dadurch gekennzeichnet, dass** zum Aufspannen und Entfernen des Transportbands oder Webs (1) an jede Stirnseite des Rahmens (2) ein Hilfsträger (3) angebracht wird und das endlose Transportband oder Web (1) über die Hilfsträger (3) an diesen entlang gleitend auf den Rahmen (2) aufgespannt oder von diesem entfernt wird.

2. Verfahren nach Anspruch 1, **dadurch gekennzeichnet, dass** die Hilfsträger (3) in axialer Richtung an die Umlenkrollen (5, 6) des Rahmens (2) angebracht werden.

3. Verfahren nach Anspruch 1 oder 2, **dadurch gekennzeichnet, dass** der Rahmen (2) zum Aufspannen und Entfernen des Webs (1) an einer seiner Längsseiten um einen Drehpunkt nach unten umgeklappt wird.

4. Transporteinrichtung für ein endloses Transportband oder Web (1) mit einem Rahmen (2), vorzugsweise für eine Druckmaschine, **gekennzeichnet durch** jeweils einen an jeder Stirnseite des Rahmens (2) zum Aufspannen und Entfernen eines endlosen Transportbands oder Webs (1) anbringbaren einzelnen Hilfsträger (3) zum Entlangleiten des Transportbands oder Webs (1) entlang diesem.

5. Transporteinrichtung nach Anspruch 4, **dadurch gekennzeichnet, dass** die Hilfsträger (3) etwa die gleiche Breite wie das Web (1) aufweisen.

6. Transporteinrichtung nach Anspruch 4 oder 5, **dadurch gekennzeichnet, dass** die Hilfsträger (3) eine Oberflächenform aufweisen, welche etwa gleich der Laufbahn des Webs (1) auf dem Rahmen (2) im Bereich der Enden des Rahmens (2) sind.

## Claims

1. Method for mounting and removing an endless conveyor belt or web (1) on a frame (2), in particular in a printing machine, **characterized in that** a secondary carrier (3) is attached at each end of the frame (2) for the mounting and removal of the conveyor belt or web (1), and the endless conveyor belt or web (1) is mounted on the frame (2) or removed therefrom by being slipped along the secondary carriers (3).

2. Method according to Claim 1, **characterized in that** the secondary carriers (3) are attached in axial alignment with the deflection pulleys (5, 6) of the frame (2).

3. Method according to Claim 1 or Claim 2, **characterized in that** the frame (2) is folded down about a rotation point at one of its longitudinal sides for the mounting and removal of the web (1).

4. Transfer device for an endless conveyor belt or web (1) with a frame (2), preferably for a printing machine, **characterized by** individual secondary carriers (3) attachable one at either end of the frame (2), for mounting and removing an endless conveyor belt or web (1) by slipping it along them.

5. Transfer device according to Claim 4, **characterized in that** the secondary carriers (3) are approximately the same width as the web (1).

6. Transfer device according to Claim 4 or 5, **characterized in that** the secondary carriers (3) possess a surface form which approximately matches the track of the web (1) on the frame (2) in the region of the ends of the frame (2).

## Revendications

1. Procédé pour brider et pour retirer une bande transporteuse ou une toile (1) sans fin sur un cadre (2), en particulier dans une machine à imprimer,
**caractérisé en ce que**
pour brider et pour retirer la bande transporteuse ou la toile (1), un support auxiliaire (3) est appliqué de chaque côté frontal du cadre (2) et la bande transporteuse ou toile (1) sans fin est bridée sur le cadre (2) de façon à glisser par-dessus les supports auxiliaires (3) le long de ces derniers ou est retirée de celui-ci.

2. Procédé selon la revendication 1,
**caractérisé en ce que**
les supports auxiliaires (3) sont appliqués en direction axiale sur les poulies de renvoi (5, 6) du cadre (2).

3. Procédé selon la revendication 1 ou 2,
**caractérisé en ce que**
le cadre (2) destiné à brider et à retirer la toile (1) est rabattu vers le bas sur l'un de ses grands côtés autour d'un point d'appui.

4. Installation de transport pour une bande transporteuse ou une toile (1) comportant un cadre (2), de préférence pour une machine à imprimer,
**caractérisée par**
un seul support auxiliaire (3) qu'on peut respectivement appliquer à chaque côté frontal du cadre (2) destiné à brider et à retirer une bande transporteuse ou une toile (1) sans fin et qui sert à guider la bande transporteuse ou la toile (1) le long du support auxiliaire.

5. Installation de transport selon la revendication 4,
**caractérisée en ce que**
les supports auxiliaires (3) présentent approximativement la même largeur que la toile (1).

6. Installation de transport selon la revendication 4 ou 5,
**caractérisée en ce que**
les supports auxiliaires (3) présentent une forme de surface qui est à peu près égale à la voie de roulement de la toile (1) sur le cadre (2) dans la zone des extrémités du cadre (2).
